# EUROPEAN PATENT SPECIFICATION

(11) **EP 2 629 858 B1**
(45) Date of publication and mention of the grant of the patent: **16.12.2020**
(21) Application number: 11835043.8
(22) Date of filing: 19.10.2011
(51) Int. Cl.: H04L 29/06, A63F 9/24, G06F 9/50

(54) **RESOURCE MANAGEMENT OF SERVER HOSTS IN ONLINE GAME ENVIRONMENT**
RESSOURCENMANAGEMENT VON SERVERHOSTS IN EINER ONLINE-SPIELUMGEBUNG
GESTION DE RESSOURCES D'HÔTES SERVEUR DANS UN ENVIRONNEMENT DE JEU EN LIGNE

(30) Priority: 20.10.2010 US 908740
(43) Date of publication of application: 28.08.2013
(73) Proprietor: Sony Computer Entertainment America LLC, San Mateo, CA 94404 (US)
(72) Inventor: FERNANDES, Brian, Foster City, California 94404-2175 (US)
(74) Representative: D Young & Co LLP
(86) International application number: PCT/US2011/056832
(87) International publication number: WO 2012/054568

(56) References cited:
- US-A1- 2010 093 438
- US-A1- 2010 169 477
- US-A1- 2010 223 378
- US-A1- 2010 223 385
- US-B1- 6 179 713

## Description

### BACKGROUND

### Field of the Invention

The present invention relates to online game servers, and more specifically, to resource management of server hosts in an online game environment.

### Background

With the recent explosive growth of online games, some online game titles have experienced a very high demand for their services. Many popular game titles have initially deployed many game servers to adequately service the demand. It is not uncommon for 100 or more servers to be dedicated to a given online game title. However, over time, the demand may significantly increase or decrease which causes problems for the resource management of online game servers.

Previously proposed arrangements are disclosed in US 2010/169477 A1, US 2010/093438 A1 and US 2010/223378 A1.

### SUMMARY

The present invention provides for managing resources of server hosts in an online game environment. The invention provides a method of managing resources of server hosts in an online game environment per claim 1, corresponding resource management system per claim 3 and non-transitory tangible storage medium per claim 4. Dependent claims define preferred embodiments of the invention.

Other features and advantages of the present invention will become more readily apparent to those of ordinary skill in the art after reviewing the following detailed description and accompanying drawings.

### BRIEF DESCRIPTION OF THE DRAWINGS

Figure 1 is a block diagram of a resource management system for managing resources of server hosts in an online game environment in accordance with one implementation of the present invention.
Figure 2 is a flowchart illustrating a process for managing resources of server hosts in an online game environment, in particular, an auto-scaling up process, in accordance with one implementation of the present invention.
Figure 3 is a block diagram of a resource management system for managing resources of server hosts in an online game environment in accordance with another implementation of the present invention.
Figure 4 is a flowchart illustrating a process for managing resources of server hosts in an online game environment, in particular, an auto-scaling down process, in accordance with one implementation of the present invention.
Figure 5A illustrates a representation of a computer system and a user.
Figure 5B is a functional block diagram illustrating the computer system hosting the resource management system.

### DETAILED DESCRIPTION

Certain implementations as disclosed herein provide for managing resources. In one implementation, a resource management system manages resources of server hosts in an online game environment. In another implementation, a resource management system manages online game environment which includes a collection of networked game hosts that supports an online game title. The online game environment includes, but not be limited to, arcade games, simulations, massively multi-player online games (MMOG), virtual reality, avatar communications, interactive television overlays, and games with motion sensing and on various devices. Further, these games, devices, and concepts are considered to be included in the online game environment whether such games, devices, and concepts provide or contribute to, in full or part, an entertainment or simulation experience.

After reading this description it will become apparent how to implement the invention in various implementations and applications. However, although various implementations of the present invention will be described herein, it is understood that these implementations are presented by way of example only, and not limitation. As such, this detailed description of various implementations should not be construed to limit the scope or breadth of the present invention.

In general, hosting costs are directly proportional to the number of servers required over the life of a game title. However, the number of servers required changes significantly over the life of a game title, usually peaking within the first few weeks of a game launch, and then dropping off thereafter. If the number of hosts required changes after the launch, then the number should be increased or decreased depending on the capacity.

In one implementation, a resource management system provides a real-time auto scaling solution of the most costly component of online gaming client/server architecture, which handles all in-game traffic between gaming clients. A large-scale online game title can typically require over 100 dedicated game server hosts to be deployed at launch. The system can include a controller that monitors system metrics from multiple sources. Based on a programmable set of criteria, the controller can either scale up or scale down game server hosts in real-time. The real-time scaling of the game server hosts provides near optimal conditions for the online game environment and promotes increased sharing of host resources between multiple titles.

Further, the system can substantially reduce the chances that the online players are affected by the real-time auto scaling operations. For example, when scaling down hosts, the controller can send commands to isolate specific hosts to be de-commissioned, and the hosts are initially removed from the pool of hosts maintained by the controller. When all in-progress games have completed on these hosts and they are confirmed idle, the hosts are shut down.

In another implementation, the management of resources of server hosts in an online game environment involves monitoring the system metrics of the online game environment including configurable thresholds and rules defined for a game title. In one example, the thresholds and rules defined for a game title include a player count. The management also involves processing and analyzing the metrics data, and determining whether the metrics data indicates an over or under capacity of the server hosts. When the metrics data indicates the under capacity of the server hosts, a request is sent to locate, deploy, connect, and register additional game servers to the online game environment. When the metrics data indicates the over capacity of the server hosts, a request is sent to isolate, remove, disconnect, and un-register surplus game servers from the online game environment to make them available to support the player load in other game titles. Thus, the under capacity indicates the increase in the player count and a need to add additional server hosts, while the over capacity indicates the decrease in the player count, and a need to remove surplus server hosts.

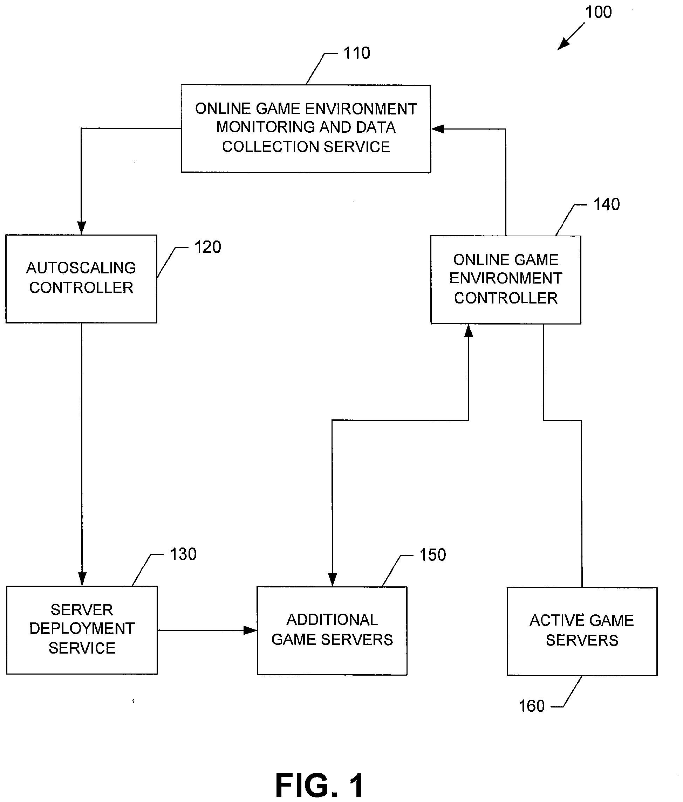

Figure 1 is a block diagram of a resource management system 100 for managing resources of server hosts in an online game environment in accordance with one implementation of the present invention. In particular, Figure 1 is a block diagram illustrating an auto-scaling up process of the server hosts. In the illustrated implementation of Figure 1, the resource management system 100 includes an online game environment controller 140, an online game environment monitoring and data collection service 110, an auto-scaling controller 120, and a server deployment service 130.

The online game environment controller 140 monitors and tracks players, games and lobbies in the online game environment, as well as the game servers and lobby servers. The online game environment controller 140 also supports external requests to change the state of the online game environment using the web interface and can isolate game servers to substantially reduce the impact to the player experience.

The online game environment monitoring and data collection service 110 monitors and collects system metrics data related to server loading (e.g., how many players are online). The auto-scaling controller 120 processes and analyzes the system metrics data collected by the online game environment monitoring and data collection service 110. The auto-scaling controller 120 also makes scaling decisions based on configurable thresholds and rules defined on a per-game-title basis. For example, the auto-scaling controller 120 analyzes the system metrics, and if it determines that the player count is rising, then the controller 120 sends a request to the server deployment service 130 to locate and deploy N additional game servers 150 in addition to the currently active game servers 160 to support the increasing player load. The server deployment service 130 controls the deployment, initiation, and termination of game servers. The service 130 can interact with servers hosted on dedicated hosts as well as cloud-based hosts. Once the server deployment service 130 starts the N additional game servers 150, the servers 150 are connected and registered to the online game environment and are made available to support the player load.

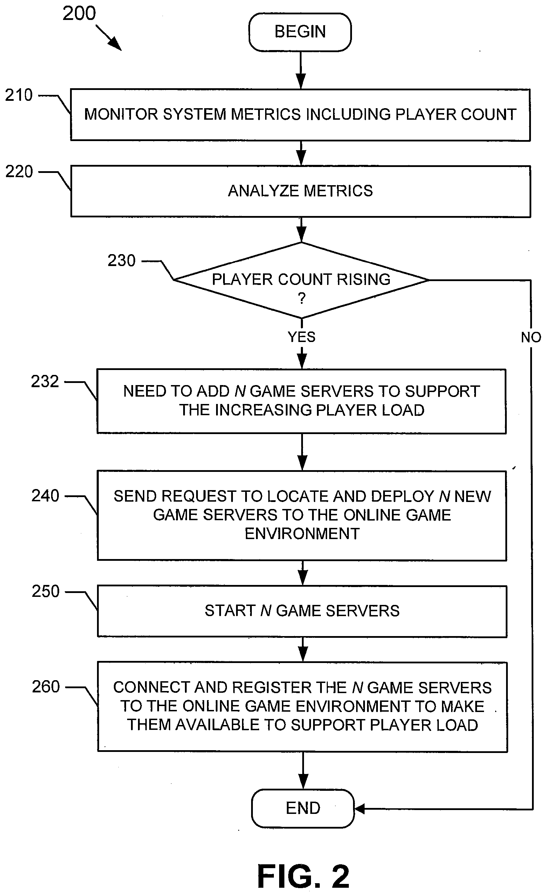

Figure 2 is a flowchart 200 illustrating a process for managing resources of server hosts in an online game environment in accordance with one implementation of the present invention. In particular, Figure 2 illustrates an auto-scaling up process of the server hosts. In the illustrated implementation of Figure 2, the system metrics including a player count is monitored, at box 210. The collected data is then processed and analyzed, at box 220. A determination is made, at box 230, whether the player count is rising or not. If it is determined that the player count is rising which means that N additional game servers are needed to support the increasing player load (see box 232), then a request is sent, at box 240, to locate and deploy N additional game servers to the online game environment. At box 250, the N additional game servers are started, and the servers are connected and registered, at box 260, to the online game environment to make them available to support the player load.

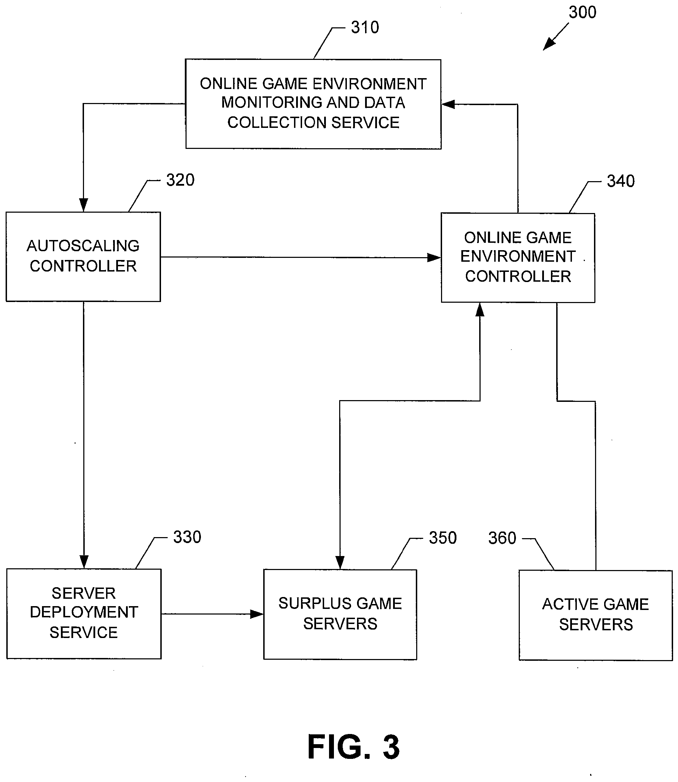

Figure 3 is a block diagram of a resource management system 300 for managing resources of server hosts in an online game environment in accordance with another implementation of the present invention. In particular, Figure 3 is a block diagram illustrating an auto-scaling down process of the server hosts. In the illustrated implementation of Figure 3, the resource management system 300 includes an online game environment controller 340, an online game environment monitoring and data collection service 310, an auto-scaling controller 320, and a server deployment service 330.

The online game environment controller 340 monitors and tracks players, games and lobbies in the online game environment, as well as the game servers and lobby servers. The online game environment controller 340 also supports external requests to change the state of the online game environment using the web interface and can isolate game servers to substantially reduce the impact to the player experience.

The online game environment monitoring and data collection service 310 monitors and collects system metrics data related to server loading (e.g., how many players are online). The auto-scaling controller 320 processes and analyzes the system metrics data collected by the online game environment monitoring and data collection service 310. The auto-scaling controller 320 also makes scaling decisions based on configurable thresholds and rules defined on a per-game-title basis. For example, the auto-scaling controller 320 analyzes the system metrics, and if it determines that the player count is falling, then the controller 320 sends a request to the server deployment service 330 to isolate and remove *N* surplus game servers 350 from the load balancing pool of available servers, leaving remaining servers as active game servers 360. The server deployment service 330 controls the deployment, initiation, and termination of game servers. The service 330 sends a request to shutdown the *N* surplus game servers. Once the server deployment service 330 stops the *N* surplus game servers 350, the servers 350 are disconnected and un-registered from the online game environment, and are made available to support the player load in other game titles.

In one implementation, the server deployment service includes a registration module to locate, deploy, connect, and register additional game servers to support an increasing player load, when the player count increases. Further, the auto-scaling controller includes an interface that requests the online game environment controller to isolate, remove, and disconnect surplus game servers from a load balancing pool of available servers, when the player count decreases.

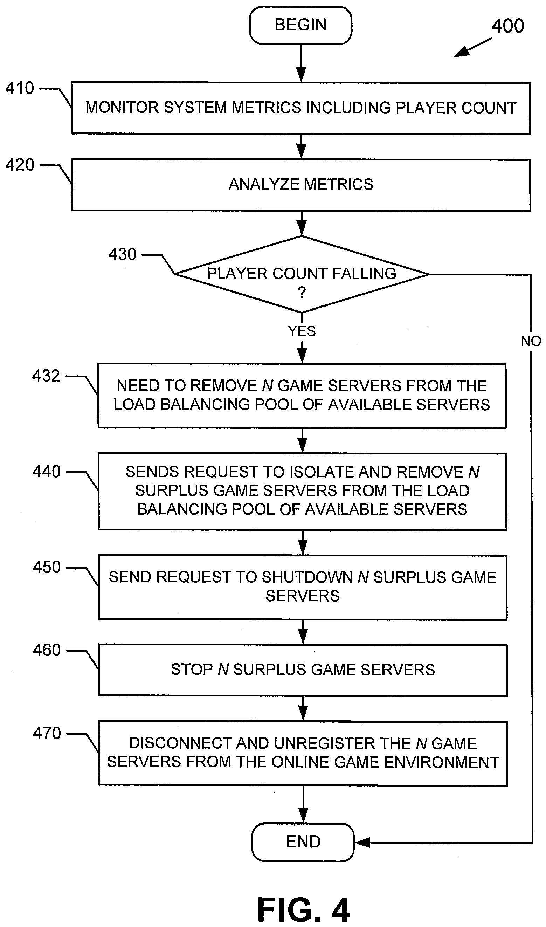

Figure 4 is a flowchart 400 illustrating a process for managing resources of server hosts in an online game environment in accordance with one implementation of the present invention. In particular, Figure 4 illustrates an auto-scaling down process of the server hosts. In the illustrated implementation of Figure 4, the system metrics including a player count is monitored, at box 410. The collected data is then processed and analyzed, at box 420. A determination is made, at box 430, whether the player count is falling or not. If it is determined that the player count is falling which means that N surplus game servers need to be removed from the load balancing pool of available servers (see box 432), then a request is sent, at box 440, to isolate and remove N surplus game servers from the online game environment due to over capacity. At box 450, a request is sent to shutdown the N surplus game servers. The N surplus game servers are stopped, at box 460, and the servers are disconnected and un-registered, at box 470, from the online game environment to make them available to support the player load in other game titles.

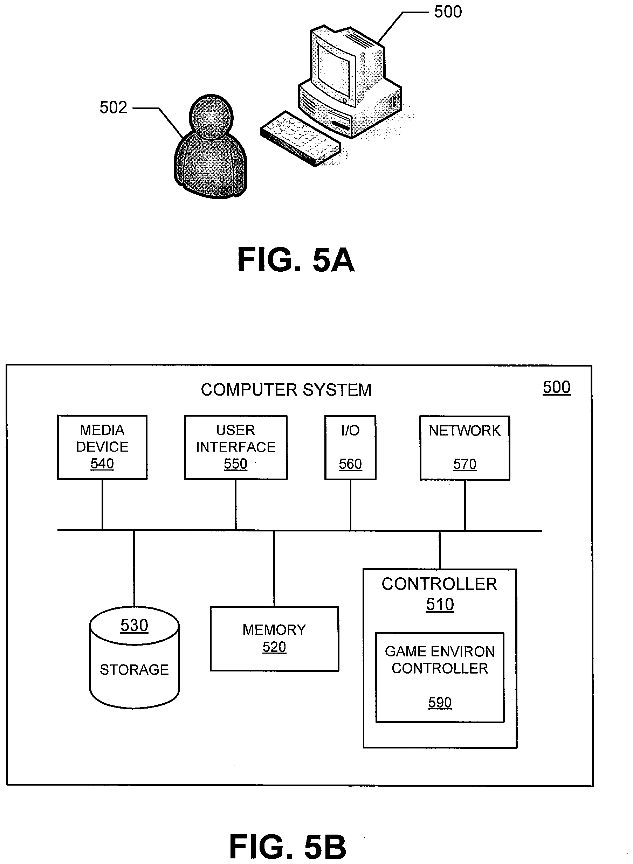

Figure 5A illustrates a representation of a computer system 500 and a user 502. The user 502 uses the computer system 500 to manage resources of server hosts in an online game environment. The computer system 500 stores and executes a resource management system 590.

Figure 5B is a functional block diagram illustrating the computer system 500 hosting the resource management system 590. The controller 510 is a programmable processor and controls the operation of the computer system 500 and its components. The controller 510 loads instructions (e.g., in the form of a computer program) from the memory 520 or an embedded controller memory (not shown) and executes these instructions to control the system. In its execution, the controller 510 provides the resource management system 590 as a software system. Alternatively, this service can be implemented as separate hardware components in the controller 510 or the computer system 500.

Memory 520 stores data temporarily for use by the other components of the computer system 500. In one implementation, memory 520 is implemented as RAM. In one implementation, memory 520 also includes long-term or permanent memory, such as flash memory and/or ROM.

Storage 530 stores data temporarily or long term for use by other components of the computer system 500, such as for storing data used by the resource management system 590. In one implementation, storage 530 is a hard disk drive.

The media device 540 receives removable media and reads and/or writes data to the inserted media. In one implementation, for example, the media device 540 is an optical disc drive.

The user interface 550 includes components for accepting user input from the user of the computer system 500 and presenting information to the user. In one implementation, the user interface 550 includes a keyboard, a mouse, audio speakers, and a display. The controller 510 uses input from the user to adjust the operation of the computer system 500.

The I/O interface 560 includes one or more I/O ports to connect to corresponding I/O devices, such as external storage or supplemental devices (e.g., a printer or a PDA). In one implementation, the ports of the I/O interface 560 include ports such as: USB ports, PCMCIA ports, serial ports, and/or parallel ports. In another implementation, the I/O interface 560 includes a wireless interface for communication with external devices wirelessly.

The network interface 570 includes a wired and/or wireless network connection, such as an RJ-45 or "Wi-Fi" interface (including, but not limited to 802.11) supporting an Ethernet connection.

The computer system 500 includes additional hardware and software typical of computer systems (e.g., power, cooling, operating system), though these components are not specifically shown in Figure 5B for simplicity. In other implementations, different configurations of the computer system can be used (e.g., different bus or storage configurations or a multi-processor configuration).

## Claims

1. A method of managing resources of server hosts in an online game environment, the method comprising, at a controller:
monitoring (210) metrics data of the online game environment including configurable thresholds and rules defined for a game title, wherein the thresholds and rules defined for a game title include a player count of how many players of the game title are online;
processing (220) and analyzing the metrics data;
determining (230) whether the metrics data indicates an over or under capacity of the server hosts (360) in the online game environment;
sending (240) a first request to locate, deploy, connect, and register additional server hosts (150) to the online game environment to support increasing load, when the metrics data indicates the under capacity of the server hosts, wherein the under capacity indicates increase in the player count and a need to add additional server hosts;
and
sending (440) a second request to isolate, remove, disconnect, and un-register surplus server hosts (350) from the online game environment to make them available to support the player load in other game titles, when the metrics data indicates the over capacity of the server hosts, wherein the over capacity indicates decrease in the player count and a need to remove surplus server hosts, wherein the second request to isolate and remove surplus server hosts comprises
sending commands to isolate the surplus game servers to be de-commissioned and to initially remove the surplus game servers from a list of server hosts to idle in-progress games.

2. The method of claim 1, wherein the second request to disconnect and un-register surplus game servers comprises
shutting down the surplus game servers when the in- progress games are idled.

3. A resource management system to manage resources of server hosts in an online game environment the system comprising:
an online game environment controller (140) configured to monitor and track players, games, and game servers (160) in the online game environment,
wherein the online game environment controller supports external requests to change the state of the online game environment;
an online game environment monitoring and data collection service (110) configured to monitor and collect system metrics data related to server loading;
an auto-scaling controller (120) configured to process and analyze the system metrics data, and to make scaling decisions based on configurable thresholds and rules defined on a per-game-title basis, wherein the thresholds and rules include a player count of how many players of the game title are online, wherein the auto-scaling controller includes an interface that requests the online game environment controller to isolate, remove, and disconnect surplus game servers (350) from a load balancing pool of available servers, when the player count decreases and there is a need to remove surplus server hosts, wherein the online game environment controller is configured to, in response to the request to isolate and remove surplus server hosts, isolate the surplus game servers to be de-commissioned and to initially remove the surplus game servers from a list of server hosts to idle in-progress games; and
a server deployment service (130) configured to control deployment, initiation, and termination of the game servers, wherein the server deployment service includes a registration module to locate, deploy, connect, and register additional game servers (150) to support an increasing player load, when the player count increases. and there is a need to add additional server hosts

4. A non-transitory tangible storage medium storing a computer program for managing resources of server hosts in an online game environment, the computer program comprising executable instructions that cause a computer to:
monitor metrics data of the online game environment including configurable thresholds and rules defined for a game title, wherein the thresholds and rules defined for a game title include a player count of how many players of the game title are online;
process and analyze the metrics data;
determine whether the metrics data indicates an over or under capacity of the server hosts in the online game environment;
send a first request to locate, deploy, connect, and register additional game servers to the online game environment to support increasing load, when the metrics data indicates the under capacity of the server hosts, wherein the under capacity indicates increase in the player count and a need to add additional server hosts;
and
send a second request to isolate, remove, disconnect, and un-register surplus game servers from the online game environment to make them available to support the player load in other game titles, when the metrics data indicates the over capacity of the server hosts, wherein the over capacity indicates decrease in the player count and a need to remove surplus server hosts, wherein executable instructions that cause a computer to send a second request to isolate and remove surplus game servers comprises executable instructions that cause a computer to
send commands to isolate the surplus game servers to be de-commissioned and to initially remove the surplus game servers from a list of server hosts to idle in- progress games.

## Patentansprüche

1. Verfahren zum Verwalten von Ressourcen von Serverhosts in einer Onlinespieleumgebung, wobei das Verfahren Folgendes in einer Steuerung umfasst:
Überwachen (210) von Metrikdaten der Onlinespieleumgebung, einschließlich für einen Spieletitel definierter konfigurierbarer Schwellen und Regeln, wobei die für einen Spieletitel definierten Schwellen und Regeln einen Spielerzählwert der Anzahl sich online befindender Spieler des Spieletitels beinhalten;
Verarbeiten (220) und Analysieren der Metrikdaten;
Bestimmen (230), ob die Metrikdaten eine Über- oder eine Unterkapazität der Serverhosts (360) in der Onlinespieleumgebung angeben;
Senden (240) einer ersten Anforderung zum Lokalisieren, Einsetzen, Verbinden und Registrieren zusätzlicher Serverhosts (150) in der Onlinespieleumgebung, um eine steigende Auslastung zu unterstützen, wenn die Metrikdaten die Unterkapazität der Serverhosts angeben, wobei die Unterkapazität einen Anstieg des Spielerzählwerts und eine Notwendigkeit des Hinzufügens zusätzlicher Serverhosts angibt;
und
Senden (440) einer zweiten Anforderung zum Isolieren, Entfernen, Trennen und Abmelden überschüssiger Serverhosts (350) von der Onlinespieleumgebung, um sie zur Unterstützung der Spielerauslastung in anderen Spieletiteln verfügbar zu machen, wenn die Metrikdaten die Überkapazität der Serverhosts angeben, wobei die Überkapazität eine Abnahme des Spielerzählwerts und eine Notwendigkeit des Entfernens überschüssiger Serverhosts angibt, wobei die zweite Anforderung zum Isolieren und Entfernen überschüssiger Serverhosts Folgendes umfasst:
Senden dahingehender Befehle, die stillzulegenden überschüssigen Spieleserver zu isolieren und die überschüssigen Spieleserver zunächst von einer Liste von Serverhosts zu entfernen, um laufende Spiele inaktiv zu machen.

2. Verfahren nach Anspruch 1, wobei die zweite Anforderung zum Trennen und Abmelden überschüssiger Spieleserver Folgendes umfasst:
Herunterfahren der überschüssigen Spieleserver, wenn die laufenden Spiele inaktiv gemacht sind.

3. Ressourcenverwaltungssystem zum Verwalten von Ressourcen von Serverhosts in einer Onlinespieleumgebung, wobei das System Folgendes umfasst:
eine Onlinespieleumgebungssteuerung (140), ausgelegt zum Überwachen und Verfolgen von Spielern, Spielen und Spieleservern (160) in der Onlinespieleumgebung,
wobei die Onlinespieleumgebungssteuerung externe Anforderungen zum Ändern des Zustands der Onlinespieleumgebung unterstützt;
einen Onlinespieleumgebungsüberwachungs- und -datenerfassungsservice (110), ausgelegt zum Überwachen und Erfassen von Systemmetrikdaten im Zusammenhang mit einer Serverauslastung;
eine Autoskalierungssteuerung (120), ausgelegt zum Verarbeiten und Analysieren der Systemmetrikdaten und zum Treffen von Skalierungsentscheidungen basierend auf auf einer Je-Spieletitel-Basis definierten konfigurierbaren Schwellen und Regeln, wobei die Schwellen und Regeln einen Spielerzählwert der Anzahl sich online befindender Spieler des Spieletitels beinhalten, wobei die Autoskalierungssteuerung eine Schnittstelle beinhaltet, die eine Anforderung an die Onlinespieleumgebungssteuerung stellt, überschüssige Spieleserver (350) von einem Auslastungsausgleichspool verfügbarer Server zu isolieren, zu entfernen und zu trennen, wenn der Spielerzählwert abnimmt und eine Notwendigkeit des Entfernens überschüssiger Serverhosts besteht, wobei die Onlinespieleumgebungssteuerung dazu ausgelegt ist, als Reaktion auf die Anforderung zum Isolieren und Entfernen überschüssiger Serverhosts die stillzulegenden überschüssigen Spieleserver zu isolieren und die überschüssigen Spieleserver zunächst von einer Liste von Serverhosts zu entfernen, um laufende Spiele inaktiv zu machen; und
einen Servereinsatzdienst (130), ausgelegt zum Steuern des Einsetzens, der Initiierung und der Beendigung der Spieleserver, wobei der Servereinsatzdienst ein Registrierungsmodul zum Lokalisieren, Einsetzen, Verbinden und Registrieren zusätzlicher Spieleserver (150) beinhaltet, um eine steigende Spielerauslastung zu unterstützen, wenn der Spielerzählwert steigt und eine Notwendigkeit des Hinzufügens zusätzlicher Serverhosts besteht.

4. Nichtflüchtiges materielles Speichermedium, auf dem ein Computerprogramm zum Verwalten von Ressourcen von Serverhosts in einer Onlinespieleumgebung gespeichert ist, wobei das Computerprogramm ausführbare Anweisungen umfasst, die bewirken, dass ein Computer Folgendes durchführt:
Überwachen von Metrikdaten der Onlinespieleumgebung, einschließlich für einen Spieletitel definierter konfigurierbarer Schwellen und Regeln, wobei die für einen Spieletitel definierten Schwellen und Regeln einen Spielerzählwert der Anzahl sich online befindender Spieler des Spieletitels beinhalten;
Verarbeiten und Analysieren der Metrikdaten;
Bestimmen, ob die Metrikdaten eine Über- oder Unterkapazität der Serverhosts in der Onlinespieleumgebung angeben;
Senden einer ersten Anforderung zum Lokalisieren, Einsetzen, Verbinden und Registrieren zusätzlicher Spieleserver in der Onlinespieleumgebung, um eine steigende Auslastung zu unterstützen, wenn die Metrikdaten die Unterkapazität der Serverhosts angeben, wobei die Unterkapazität einen Anstieg des Spielerzählwerts und eine Notwendigkeit des Hinzufügens zusätzlicher Serverhosts angibt;
und
Senden einer zweiten Anforderung zum Isolieren, Entfernen, Trennen und Abmelden überschüssiger Spieleserver von der Onlinespieleumgebung, um sie zur Unterstützung der Spielerauslastung in anderen Spieletiteln verfügbar zu machen, wenn die Metrikdaten die Überkapazität der Serverhosts angeben, wobei die Überkapazität eine Abnahme des Spielerzählwerts und eine Notwendigkeit des Entfernens überschüssiger Serverhosts angibt, wobei ausführbare Anweisungen, die bewirken, dass ein Computer eine zweite Anforderung zum Isolieren und Entfernen überschüssiger Spieleserver sendet, ausführbare Anweisungen umfassen, die bewirken, dass ein Computer Folgendes durchführt:
Senden dahingehender Befehle, die stillzulegenden überschüssigen Spieleserver zu isolieren und die überschüssigen Spieleserver zunächst von einer Liste von Serverhosts zu entfernen, um laufende Spiele inaktiv zu machen.

## Revendications

1. Procédé de gestion des ressources des serveurs hôtes dans un environnement de jeu en ligne, le procédé comprenant, au niveau d'un contrôleur, les étapes suivantes :
surveiller (210) des données de mesure de l'environnement de jeu en ligne, y compris des seuils et des règles configurables définis pour un titre de jeu, où les seuils et les règles définis pour un titre de jeu comprennent un comptage des joueurs spécifiant combien de joueurs du titre de jeu sont en ligne ;
traiter (220) et analyser les données de mesure ;
déterminer (230) si les données de mesure indiquent une surcapacité ou une sous-capacité des serveurs hôtes (360) dans l'environnement de jeu en ligne ;
envoyer (240) une première demande pour localiser, déployer, connecter et enregistrer des serveurs hôtes supplémentaires (150) dans l'environnement de jeu en ligne afin de supporter une charge croissante, lorsque les données de mesure indiquent une sous-capacité des serveurs hôtes, où la sous-capacité indique une augmentation du nombre de joueurs et le besoin d'ajouter des serveurs hôtes supplémentaires ;
et
envoyer (440) une deuxième demande pour isoler, retirer, déconnecter et désinscrire les serveurs hôtes excédentaires (350) de l'environnement de jeu en ligne afin de les rendre disponibles pour supporter la charge des joueurs dans d'autres titres de jeux, lorsque les données de mesure indiquent la surcapacité des serveurs hôtes, où la surcapacité indique une diminution du nombre de joueurs et un besoin de retirer les serveurs hôtes excédentaires, où la deuxième demande pour isoler et retirer les serveurs hôtes excédentaires comprend d'envoyer des commandes pour isoler les serveurs de jeu excédentaires à désactiver et retirer initialement les serveurs de jeu excédentaires d'une liste de serveurs hôtes pour mettre au ralenti des jeux en cours.

2. Procédé selon la revendication 1, dans lequel la deuxième demande de déconnexion et de désinscription des serveurs de jeu excédentaires comprend :
la fermeture des serveurs de jeu excédentaires lorsque les jeux en cours sont inactifs.

3. Système de gestion des ressources pour gérer les ressources de serveurs hôtes dans un environnement de jeu en ligne, le système comprenant :
un contrôleur d'environnement de jeu en ligne (140) configuré pour surveiller et suivre les joueurs, les jeux et les serveurs de jeu (160) dans l'environnement de jeu en ligne,
où le contrôleur d'environnement de jeu en ligne prend en charge les demandes externes de modification de l'état de l'environnement de jeu en ligne ;
un service de surveillance de l'environnement de jeu en ligne et de collecte de données (110) configuré pour surveiller et collecter des données de mesure système sur la charge des serveurs ;
un contrôleur de mise à l'échelle automatique (120) configuré pour traiter et analyser les données de mesure du système et pour prendre des décisions de mise à l'échelle sur la base de seuils et de règles configurables définis sur la base du titre du jeu, où les seuils et les règles comprennent un comptage des joueurs spécifiant combien de joueurs du titre de jeu sont en ligne, où le contrôleur de mise à l'échelle automatique comprend une interface qui demande au contrôleur d'environnement de jeu en ligne d'isoler, de retirer et de déconnecter les serveurs de jeu excédentaires (350) d'un ensemble de serveurs disponibles à équilibrage de charge, lorsque le nombre de joueurs diminue et qu'il est nécessaire de retirer les hôtes de serveurs excédentaires, où le contrôleur d'environnement de jeu en ligne est configuré, en réponse à la demande d'isolement et de retrait des serveurs hôtes excédentaires, pour isoler les serveurs de jeu excédentaires pour les désactiver et pour initialement retirer les serveurs de jeu excédentaires d'une liste de serveurs hôtes pour mettre au ralenti des jeux en cours ; et
un service de déploiement de serveurs (130) configuré pour contrôler le déploiement, le lancement et l'arrêt des serveurs de jeu, où le service de déploiement de serveurs comprend un module d'enregistrement pour localiser, déployer, connecter et enregistrer des serveurs de jeu supplémentaires (150) pour prendre en charge une charge de joueurs croissante, lorsque le nombre de joueurs augmente et qu'il est nécessaire d'ajouter des serveurs hôtes supplémentaires.

4. Support de stockage tangible non transitoire stockant un programme informatique pour la gestion des ressources des serveurs hôtes dans un environnement de jeu en ligne, le programme informatique comprenant des instructions exécutables qui amènent un ordinateur à :
surveiller des données de mesure de l'environnement de jeu en ligne, y compris des seuils et des règles configurables définis pour un titre de jeu, où les seuils et les règles définis pour un titre de jeu comprennent un comptage des joueurs spécifiant combien de joueurs du titre de jeu sont en ligne ;
traiter et analyser les données de mesure ;
déterminer si les données de mesure indiquent une surcapacité ou une sous-capacité des serveurs hôtes dans l'environnement de jeu en ligne ;
envoyer une première demande pour localiser, déployer, connecter et enregistrer des serveurs hôtes supplémentaires dans l'environnement de jeu en ligne afin de supporter une charge croissante, lorsque les données de mesure indiquent une sous-capacité des serveurs hôtes, où la sous-capacité indique une augmentation du nombre de joueurs et le besoin d'ajouter des serveurs hôtes supplémentaires ;
et
envoyer une deuxième demande pour isoler, retirer, déconnecter et désinscrire les serveurs de jeu excédentaires de l'environnement de jeu en ligne afin de les rendre disponibles pour supporter la charge des joueurs dans d'autres titres de jeux, lorsque les données de mesure indiquent la surcapacité des serveurs hôtes, où la surcapacité indique une diminution du nombre de joueurs et un besoin de retirer les serveurs hôtes excédentaires, où les instructions exécutables qui amènent un ordinateur à envoyer une deuxième demande pour isoler et retirer les serveurs de jeu excédentaires comprend des instructions exécutables qui amènent un ordinateur à :
envoyer des commandes pour isoler les serveurs de jeu excédentaires à désactiver et retirer initialement les serveurs de jeu excédentaires d'une liste de serveurs hôtes pour mettre au ralenti des jeux en cours.
